(19) Europäisches Patentamt
European Patent Office
Office européen des brevets

(11) Publication number: 0 087 207
B1

(12) # EUROPEAN PATENT SPECIFICATION

(45) Date of publication of patent specification: **06.08.86**

(51) Int. Cl.[4]: **B 01 D 53/14,** B 01 D 53/34

(21) Application number: **83300187.8**

(22) Date of filing: **14.01.83**

(54) **A process for removal of H2S from gaseous streams with amino compounds.**

(30) Priority: **18.01.82 US 339882**
**18.01.82 US 339898**

(43) Date of publication of application:
**31.08.83 Bulletin 83/35**

(45) Publication of the grant of the patent:
**06.08.86 Bulletin 86/32**

(84) Designated Contracting States:
**BE DE FR GB IT NL**

(56) References cited:
**DE-A-2 134 379**
**GB-A-1 173 173**
**GB-A-2 079 307**

(73) Proprietor: **Exxon Research and Engineering Company**
**P.O.Box 390 180 Park Avenue**
**Florham Park New Jersey 07932 (US)**

(72) Inventor: **Stogryn, Eugene Leo**
**3 Sharp Road**
**Edison New Jersey (US)**
Inventor: **Savage, David William**
**6 Sunset Drive**
**Summit New Jersey (US)**
Inventor: **Sartori, Guido**
**25 West Price Street**
**Linden New Jersey (US)**

(74) Representative: **Field, Roger Norton et al**
**ESSO Engineering (Europe) Ltd. Patents & Licences Apex Tower High Street**
**New Malden Surrey KT3 4DJ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 087 207 B1

## Description

This invention relates to an improved process for removal of $H_2S$ from normally gaseous streams wherein absorbent solutions of a certain class of heterocyclic amino compounds are employed. Preferably, the invention is directed to a process for selectively removing $H_2S$ from gaseous mixtures containing $H_2S$ and $CO_2$ employing these absorbent solutions.

The treatment of acid gas mixtures containing, *inter alia*, $CO_2$ and $H_2S$ with aqueous amine solutions in an absorber tower typically results in the simultaneous removal of substantial amounts of both the $CO_2$ and $H_2S$. For example, in one such process generally referred to as the "aqueous amine process", relatively concentrated amine solutions are employed. A recent improvement on this process involves the use of sterically hindered amines to obtain nearly complete removal of acid gases such as $CO_2$ and $H_2S$. This type of process may be used where the partial pressures of the $CO_2$ and related gases are low. Another process often used for specialised applications where the partial pressure of $CO_2$ is extremely high and/or where many acid gases are present, e.g., $H_2S$, COS, $CH_3SH$ and $CS_2$, involves the use of an amine in combination with a physical absorbent, generally referred to as the "nonaqueous solvent process". An improvement on this process involves the use of sterically hindered amines and organic solvents as the physical absorbent.

It is often desirable, however, to treat acid gas mixtures containing both $CO_2$ and $H_2S$ so as to remove the $H_2S$ selectively from the mixture, thereby minimizing removal of the $CO_2$. Selective removal of $H_2S$ results in a relatively high $H_2S/CO_2$ ratio in the separated acid gas which simplifies the conversion of $H_2S$ to elemental sulfur using the Claus process.

The typical reactions of aqueous secondary and tertiary amines with $CO_2$ and $H_2S$ can be represented as follows:

$$H_2S + R_3N \rightleftharpoons R_3NH^+ + SH^- \quad (1)$$

$$H_2S + R_2NH \rightleftharpoons R_2NH_2^+ + SH^- \quad (2)$$

$$CO_2 + R_3N + H_2O \rightleftharpoons R_3NH^+ + HCO_3^- \quad (3)$$

$$CO_2 + 2R_2NH \rightleftharpoons R_2NH_2^+ + R_2NCOO^- \quad (4)$$

wherein R is an organic radical which may be the same or different and may be substituted with a hydroxyl group. The above reactions are reversible, and the partial pressures of both $CO_2$ and $H_2S$ are thus important in determining the degree to which the above reactions occur.

While selective $H_2S$ removal is applicable to a number of gas treating operations including treatment of hydrocarbon gases from shale pyrolysis, refinery gas and natural gas having a low $H_2S/CO_2$ ratio, it is particularly desirable in the treatment of gases wherein the partial pressure of $H_2S$ is relatively low compared to that of $CO_2$ because the capacity of an amine to absorb $H_2S$ from the latter type gases is very low. Examples of gases with relatively low partial pressures of $H_2S$ include synthetic gases made by coal gasification, sulfur plant tail gas and low-Joule fuel gases encountered in refineries where heavy residual oil is being thermally converted to lower molecular weight liquids and gases.

Solutions of primary and secondary amines such as monoethanolamine (MEA), diethanolamine (DEA), dipropanolamine (DPA), and hydroxyethoxyethylamine (DGA) are known to absorb both $H_2S$ and $CO_2$ gas. Diisopropanolamine (DIPA) is relatively unique among secondary aminoalcohols in that it has been used industrially, alone or with a physical solvent such as sulfolane, for selective removal of $H_2S$ from gases containing $H_2S$ and $CO_2$.

The tertiary amine, methyldiethanolamine (MDEA), has a high degree of selectivity toward $H_2S$ absorption over $CO_2$, but recently it was discovered that aqueous solutions of dialkylmonoalkanolamines, and particularly diethylmonoethanolamine (DEAE), have higher selectivity and capacity for $H_2S$ removal at higher loading levels than MDEA solutions.

Other absorbent solutions which are selective to $H_2S$ removal include solutions of 1-formylpiperidine, piperazine, and solutions, in N-methyl-2-pyrrolidone, of cyanopyridine, an aromatic nitrile, an anhydride, or a piperazine.

Also, DE—A—2134379 discloses certain classes of amino ethers for the absorption of sulphur dioxide and hydrogen sulphide from gases containing them.

It has now been discovered that absorbent solutions of a certian class of amino compounds defined as either nitrogen heterocyclic tertiary aminoalkanols, nitrogen heterocyclic tertiary aminoetheralkanols, tertiary amino azabicyclic alcohols or tertiary amino azalicyclic ether alcohols have a high selectivity for $H_2S$ compared to $CO_2$. These amino compounds surprisingly maintain their high selectivity at high $H_2S$ and $CO_2$ loadings.

In general, the present invention relates to a process for the removal of $H_2S$ from a normally gaseous stream which also contains carbon dioxide which comprises contacting said stream in an absorber with an absorbent solution comprising a solvent and an amino compound wherein the amino compound is a nitrogen heterocyclic tertiary aminoalkanol, a nitrogen heterocyclic tertiary aminoetheralkanol, a tertiary amino azabicyclic alcohol or a tertiary amino azabicyclic ether alcohol, the process being conducted under

conditions wherein the residence time of the liquid in the absorber is minimised to reduce reaction with carbon dioxide whilst said residence time is maintained sufficient for the liquid to absorb substantially the maximum amount of hydrogen sulphide gas.

In a preferred embodiment of the invention, the process involves the selective absorption of $H_2S$ from a normally gaseous stream also containing $CO_2$ by contacting the stream with a solution of the defined amino compound in a solvent under conditions whereby $H_2S$ is selectively absorbed from the stream, wherein the amino compound is also characterized as having a $pK_a$ value at 20°C greater than 8.6. The preferred solvents herein are water, a physical absorbent, preferably sulfolane, or a mixture thereof.

In a still more preferred embodiment, after the contacting step whereby $H_2S$ is selectively absorbed from the stream, the absorbent solution containing the $H_2S$ is regenerated at least partially and the regenerated solution is recycled for selective absorption of $H_2S$ by recontacting it with the stream. Preferably, the regeneration step is carried out by heating and stripping the solution of any of its absorbed $H_2S$ and more preferably by heating and stripping the solution with steam.

In the drawings:

Fig. 1 is a diagrammatic flow sheet illustrating an absorption-regeneration unit for selective removal of $H_2S$ from gaseous streams containing $H_2S$ and $CO_2$.

Fig. 2 is a diagrammatic flow sheet illustrating an experimental sparged absorber unit for use in rapid determination of the selectivity of the amino compound for selective removal of $H_2S$ from gaseous streams containing $H_2S$ and $CO_2$.

Fig. 3 graphically illustrates the selectivity for $H_2S$ plotted against the $H_2S$ and $CO_2$ loading for tropine and N-(3-hydroxypropyl)pyrrolidine (HPP) as compared to MDEA as control.

Fig. 4 graphically illustrates the selectivity for $H_2S$ plotted against the $H_2S$ and $CO_2$ loading for 9-methyl-granatanin-3-ol and N-(3-hydroxypropyl)piperidine (HPPi).

Fig. 5 graphically illustrates the selectivity for $H_2S$ plotted against the $H_2S$ and $CO_2$ loading for tropine and N-(3-hydroxypropyl)azetidine (HPA) was compared to DEAE, a non-cyclic aminoalkanol, as control.

Fig. 6 graphically illustrates the selectivity for $H_2S$ plotted against the $H_2S$ and $CO_2$ loading for N-hydroxyethylpyrrolidine (HEP) and N-(2-hydroxyethoxyethyl)pyrrolidine (HEEP) as compared to DEAE as control.

Fig. 7 graphically illustrates the selectivity for $H_2S$ plotted against the $H_2S$ and $CO_2$ loading for N-(4-hydroxy-2-butyl)pyrrolidine (H2BP), N-(4-hydroxybutyl)pyrrolidine (HBP), N-(3-hydoxypropyl)piperidine (HPPi) and N-methyl-2-hydroxyethylpiperidine (MHEPi).

Fig. 8 graphically illustrates the effect of the size of the heterocycle (n is number of ring atoms) on the selectivity for $H_2S$ plotted against the $H_2S$ and $CO_2$ loading, using N-(3-hydroxypropyl)azetidine, N-(3-hydroxypropyl)pyrrolidine, N-(3-hydroxypropyl)piperidine and N-(3-hydroxypropyl)azepane.

Fig. 9 graphically illustrates the effect of substitution of the heterocyclic ring by carbon on the selectivity for $H_2S$ plotted against the $H_2S$ and $CO_2$ loading, using N-(3-hydoxypropyl)-2,5-dimethylpyrrolidine (HPDP) and N-(hydroxyethoxyethyl)-2,5-dimethylpyrrolidine (HEEDP).

The nitrogen heterocyclic tertiary aminoalkanols or aminoetheralkanols of the present invention may be defined as compounds wherein the heterocycle portion contains 4—8 ring atoms, preferably 4—7 ring atoms, most preferably five ring atoms, of which one is nitrogen, and may be unsubstituted or substituted, e.g., with hydroxyl, alkyl or hydroxyalkyl radicals, and wherein the alkanol portion is arranged in a linear or branched fashion, connected to the heterocycle portion via a ring nitrogen or ring carbon atom. The alkanol portion contains at least two carbon atoms, preferably 2—10 carbon atoms, when the alkanol carbon atom is attached to the nitrogen atom. The hydroxy carbon group can be attached directly to a ring carbon atom or separated from a ring carbon atom by 1—5 carbon atoms. The hydrocarbon chain of the alkanol portion may be alkoxylated, i.e., may contain one or more ether oxygen atoms. The hydroxyl functionality of the alkanol chain may be primary or secondary.

Representative such tertiary aminoalkanols and aminoetheralkanols, include, for example, N-(3-hydroxypropyl)azetidine, N-hydroxyethylpyrrolidine, N-(3-hydroxypropyl)pyrrolidine, N-(2-hydoxypropyl)-pyrrolidine, N-(4-hydroxy-2-butyl)pyrrolidine, N-(4-hydroxybutyl)pyrrolidine, N-(hydroxyethoxyethyl)-2,5-dimethylpyrrolidine, N-(3-hydroxypropyl)-2,5-dimethylpyrrolidine, N-(3-hydroxypropyl)piperidine, N-hydroxyethylpiperidine, N-methyl-2-hydroxyethylpiperidine, N-methyl-3-hydroxymethylpiperidine, N-(2-hydroxyethoxyethyl)pyrrolidine, N-2-[(2-hydroxypropoxy)ethyl]pyrrolidine, N-2-[(2-hydroxypropoxy)-propyl]pyrrolidine, N-(2-hydoxyethoxyethyl)piperidine, N-(3-hydroxypropyl)azepane, and the like.

The other type of amino compounds applicable herein, namely, the tertiary amino azabicyclic alcohols or ether alcohols, may be defined as compounds wherein the two fused rings, which share at least one side, each have 4—10 ring atoms, preferably 4—7 ring atoms, of which one ring atom is nitrogen. Each ring may be unsubstituted or substituted, and the nitrogen atom forming the tertiary amino portion of the compound is situated within the bicyclic framework at a bridgehead or non-bridgehead ring position. The hydroxyl group(s) of the alcohol may be directly connected to the ring and/or may be connected to a hydrocarbon chain, preferably containing 2—10 carbon atoms, arranged in a linear or branched fashion and connected to the heterocycle via a ring nitrogen or a ring carbon atom. It is noted that the hydrocarbon chain may be alkoxylated, i.e., may contain one or more ether oxygen atoms. In the case where the hydroxyl group is attached to a hydrocarbon chain, it may be primary or secondary.

Representatives of such azabicyclic alcohols and ether alcohols include, for example, tropine,

pseudotropine, 9-methylgranatanin-3-ol, isoquinuclidine ethanol, trachelanthamidine, 4-hydroxymethylquinuclidine, N-hydroxyethylnortropine, N-hydroxyethyl(9-azabicyclo[3,3,1]nonane), N-hydroxyethoxyethyl(9-azabicyclo[4.2.1]nonane), 3-hydroxymethyl-8-methyl-8-azabicyclo[3.2.1]octane, and the like.

The preferred amino compounds of this invention are N-(3-hydroxypropyl)azetidine, N-hydroxyethylpyrrolidine, N-(3-hydroxypropyl)pyrrolidine, 9-methylgranatanin-3-ol and tropine. The most preferred amino compound herein is tropine.

The amino compounds used in the selective absorption process of the present invention usually have a $pK_a$ value at 20°C greater than 8.6, preferably greater than about 9.5 and more preferably the $pK_a$ value of the amino compound will range between about 9.5 and about 10.6. If the $pK_a$ is less than 8.6 the reaction with $H_2S$ is decreased, whereas if the $pK_a$ of the amino compound is much greater than about 10.6 an excessive amount of steam is required to regenerate the solution. Also, to ensure operational efficiency with minimal losses of the amino compound, the amino compound may have a relatively low volatility. For example, the boiling point of the amine (at 760 mm) may be typically greater than about 180°C, preferably greater than 200°C, and more preferably greater than 225°C.

Another means for determining whether an amino compound is selective to $H_2S$ removal other than by measuring its $pK_a$ is by measuring its $^{15}N$ nuclear magnetic resonance (NMR) chemical shift. By such measurements it has been found that the tertiary amino compounds herein may have a $^{15}N$ NMR chemical shift greater than about $\delta$ +50 ppm, preferably greater than about $\delta$ +55 ppm, when a 90% by wt. amine solution in 10% by wt. $D_2O$ at 35°C is measured by a spectrometer using liquid (neat) ammonia at 25°C as a zero reference value. For example, tropine and N-(2-hydroxyethoxyethyl)pyrrolidine (HEEP) have $^{15}N$ NMR chemical shift values of $\delta$ +62.2 ppm and $\delta$ +53.2 ppm, respectively, whereas diethylmonoethanolamine (DEAE), N-methyl-N-tertiarybutylaminoethoxyethanol, and methyldiethanolamine (MDEA) have $^{15}N$ NMR chemical shift values of $\delta$ +43.7, $\delta$ +45.0, and $\delta$ +27.4 ppm, respectively. As evident from the data shown herein, those amino compounds measured having a $^{15}N$ NMR chemical shift value greater than $\delta$ +50 had a higher $H_2S$ selectivity than DEAE and MDEA having a $^{15}N$ NMR chemical shift less than $\delta$ +50 ppm.

The amino compounds herein may also be characterized by their high solubility in water at selective $H_2S$ removal conditions, and most of the compounds are also generally soluble in polar organic solvent systems which may or may not contain water. The term "absorbent solution" as used herein includes but is not limited to solutions wherein the amino compound is dissolved in a solvent selected from water or a physical absorbent or a mixture of water and physical absorbent. Solvents which are physical absorbents (as opposed to the amino compounds which are chemical absorbents) by definition function to solubilize the amino compounds and include, e.g., aliphatic acid amides, N-alkylated pyrrolidones, sulfones, sulfoxides, glycols and the mono- and diethers thereof. The preferred physical absorbents herein are sulfones, and most particularly, sulfolane.

The absorbent solution may have a concentration of amino compound of about 0.1 to 6 moles per liter of the total solution, and preferably 1 to 4 moles per liter, depending primarily on the specific amino compound employed and the solvent system utilized. If the solvent system is a mixture of water and a physical absorbent, the typical effective amount of the physical absorbent employed may vary from 0.1 to 5 moles per liter of total solution, and preferably from 0.5 to 3 moles per liter, depending mainly on the type of amino compound being utilized. The dependence of the concentration of amino compound on the particular compound employed is significant because increasing the concentration of amino compound may reduce the basicity of the absorbent solution, thereby adversely affecting its selectivity for $H_2S$ removal, particularly if the amino compound has a specific aqueous solubility limit which will determine maximum concentration levels within the range given above. It is important, therefore, that the proper concentration level appropriate for each particular amino compound be maintained to ensure satisfactory results.

The solution of this invention may include a variety of additives typically employed in selective gas removal processes, e.g., antifoaming agents, antioxidants, corrosion inhibitors, and the like. The amount of these additives will typically be in the range that they are effective, i.e., an effective amount.

Also, the amino compounds described herein may be admixed with other amino compounds (i.e., any amines other than those employed as amino compounds herein) as a blend, preferably with methyldiethanolamine, to form the absorbent solution. The ratio of the respective amino compounds may vary widely, for example, from 1 to 99 weight percent of the heterocyclic amino compounds described herein.

Three characteristics which are of ultimate importance in determining the effectiveness of the amino compounds herein for $H_2S$ removal are "selectivity", "loading" and "capacity". The term "selectivity" as used throughout the specification is defined as the following mole ratio fraction:

$$\frac{(\text{moles of } H_2S/\text{moles of } CO_2) \text{ in liquid phase}}{(\text{moles of } H_2S/\text{moles of } CO_2) \text{ in gaseous phase}}$$

The higher this fraction, the greater the selectivity of the absorbent solution for the $H_2S$ in the gas mixture.

By the term "loading" is meant the concentration of the $H_2S$ and $CO_2$ gases physically dissolved and chemically combined in the absorbent solution as expressed in moles of gas per mole of the amine. The best amino compounds are those which exhibit good selectivity up to a relatively high loading level. The

amino compounds used in the practice of the present ivnention may have a "selectivity" of not substantially less than 10 at a "loading" of 0.1 moles, preferably, a "selectivity" of not substantially less than 10 at a loading of 0.2 or more moles of $H_2S$ and $CO_2$ per mole of the amino compound.

"Capacity" is defined as the moles of $H_2S$ loaded in the absorbent solution at the end of the absorption step minus the moles of $H_2S$ loaded in the absorbent solution at the end of the desorption step. High capacity enables one to reduce the amount of amine solution to be circulated and use less heat or steam during regeneration.

The amino compounds herein are typically capable of reducing the $H_2S$ in gaseous mixtures to a relatively low level, e.g., less than about 200 ppm and typically have a relatively high capacity for $H_2S$, greater than about 0.2 mole of $H_2S$ per mole of amine. The amino compounds may be characterized as having a "kinetic selectivity" for $H_2S$, i.e., a faster reaction rate for $H_2S$ than for $CO_2$ at absorption conditions. In addition they may be characterized as having a higher capacity for $H_2S$ at equivalent kinetic selectivity for $H_2S$ over $CO_2$. This higher capacity results in the economic advantage of lower steam requirements during regeneration.

The normally gaseous stream herein necessarily includes $H_2S$, ordinarily in gaseous form. (The term "normally" refers to ambient conditions of temperature and pressure.) It may optionally include other gases such as $CO_2$, $N_2$, $CH_4$, $H_2$, CO, $H_2O$, COS, HCN, $C_2H_4$, $NH_3$, and the like. Often such gas mixtures are found in combustion gases, refinery gases, town gas, natural gas, syn gas, water gas, propane, propylene, heavy hydrocarbon gases, etc. The absorbent solution herein is particularly effective when the gaseous mixture is a gas, obtained, for example, from shale oil retort gas, coal or gasification of heavy oil with air/steam or oxygen/steam, thermal conversion of heavy residual oil to lower molecular weight liquids and gases, or in sulfur plant tail gas clean-up operations.

The absorption step of this invention generally involves contacting the normally gaseous stream with the absorbent solution in any suitable contacting vessel. In such processes, the normally gaseous mixture from which the $H_2S$ is to be removed may be brought into intimate contact with the absorbent solution using conventional means, such as a tower or vessel packed with, for example, rings or with sieve plates, or a bubble reactor.

In a typical mode of practising the invention wherein $H_2S$ is selectively absorbed from a mixture also containing $CO_2$, the absorption step is conducted by feeding the normally gaseous mixture into the lower portion of the absorption tower while fresh absorbent solution is fed into the upper region of the tower. The gaseous mixture, freed largely from the $H_2S$, emerges from the upper portion of the tower, and the loaded absorbent solution, which contains the selectively absorbed $H_2S$, leaves the tower near or at its bottom. Preferably, the inlet temperature of the absorbent solution during the absorption step is in the range of from about 20 to about 100°C, and more preferably from 40 to about 60°C. Pressures may vary widely; acceptable pressures are between 0.4 and 140.6 kg/cm$^2$ (39,227—13,788,149 Pa), preferably 1.4 and 105.5 kg/cm$^2$ (137,293—10,346,015 Pa), and most preferably 1.8 and 70.3 kg/cm$^2$ (176,520—6,894,075 Pa) in the absorber. The contacting takes place under conditions such that the $H_2S$ is selectively absorbed by the solution. The absorption conditions and apparatus are designed so as to minimize the residence time of the liquid in the absorber to reduce $CO_2$ pickup while at the same time maintaining sufficient residence time of gas with liquid to absorb a maximum amount of the $H_2S$ gas. The amount of liquid required to be circulated to obtain a given degree of $H_2S$ removal will depend on the chemical structure and basicity of the amino compound and on the partial pressure of $H_2S$ in the feed gas. Gas mixtures with low partial pressures such as those encountered in the thermal gas conversion process will require more liquid under the same absorption conditions than gases with higher partial pressures such as shale oil retort gases.

A typical procedure for the selective $H_2S$ removal phase of the process comprises selectively absorbing $H_2S$ via countercurrent contact of the gaseous mixture containing $H_2S$ and $CO_2$ with the solution of the amino compound in a column containing a plurality of trays at a low temperature, e.g., below 45°C, and at a gas velocity of at least about 9.1 cm/sec (based on "active" or aerated tray surface), depending on the operating pressure of the gas, said tray column having fewer than 20 contacting trays, with, e.g., 4—16 trays being typicaly employed. Alternatively, packed beds may be used in place of trays.

After contacting the normally gaseous mixture with the absorbent solution, which becomes saturated or partially saturated with $H_2S$, the solution may be at least partially regenerated so that it may be recycled back to the absorber. As with absorption, the regeneration may take place in a single liquid phase. Regeneration or desorption of the acid gases from the absorbent solution may be accomplished by conventional means such as pressure reduction of the solution or increase of temperature to a point at which the absorbed $H_2S$ flashes off, or by passing the solution into a vessel of similar construction to that used in the absorption step, at the upper portion of the vessel, and passing an inert gas such as air or nitrogen or preferably steam upwardly through the vessel. The temperature of the solution during the regeneration step should be in the range from about 50 to about 170°C, and preferably from about 80 to 120°C, and the pressure of the solution on regeneration should range from about 0.4 to about 7.0 kg/cm$^2$ (≈3,923—≈686,465 Pa), preferably 0.07 to about 3.5 kg/cm$^2$ (6,865—343,233 Pa). The absorbent solution, after being cleansed of at least a portion of the $H_2S$ gas, may be recycled back to the absorbing vessel. Makeup absorbent may be added as needed.

In the preferred regeneration technique, the $H_2S$-rich solution is sent to the regenerator wherein the absorbed components are stripped by the steam which is generated by re-boiling the solution. Pressure in

the flash drum and stripper is usually 0.07 to about 3.5 kg/cm$^2$ (6,865—343,233 Pa), preferably 1.05 to about 2.1 kg/cm$^2$ (102,70—205,940 Pa), and the temperature is typically in the range from about 50 to 170°C, preferably about 80 to 120°C. Stripper and flash temperatures will, of course, depend on stripper pressure; thus at about 1.05 to 2.1 kg/cm$^2$ (102,970—205,940 Pa) stripper pressure, the temperature will be about 80 to about 120°C during desorption. Heating of the solution to be regenerated may very suitably be effected by means of indirect heating with low-pressure steam. It is also possible, however, to use direct injection of steam.

In one embodiment for practising the entire process herein, as illustrated in Figure 1, the gas mixture to be purified is introduced through line *1* into the lower portion of a gas-liquid countercurrent contacting column 2, said countacting column having a lower section *3* and an upper section *4*. The upper and lower sections may be segregated by one or a plurality of packed beds as desired. The absorbent solution as described above is introduced into the upper portion of the column through a pipe *5*. The solution flowing to the bottom of the column encounters the gas flowing countercurrently and dissolves the $H_2S$ preferentially. The gas freed from most of the $H_2S$ leaves through a pipe *6* for final use. The solution, containing mainly $H_2S$ and some $CO_2$, flows toward the bottom portion of the column, from which it is discharged through pipe *7*. The solution is then pumped via pump *8* through an optional heat exchanger and cooler *9* disposed in pipe *7*, which allows the hot solution from the regenerator *12* to exchange heat with the cooler solution from the absorber column *2* for energy conservation. The solution is entered via pipe *7* to a flash drum *10* equipped with a line (not shown) which vents to line *13* and then introduced by pipe *11* into the upper portion of the regenerator *12*, which is equipped with several plates and effects the desorption of the $H_2S$ and $CO_2$ gases carried along in the solution. This acid gas mixture is passed through a pipe *13* into a condenser *14* wherein cooling and condensation of water and amine solution from the gas occur. The gas then enters a separator *15* where further condensation is effected. The condensed solution is returned through pipe *16* to the upper portion of the regenerator *12*. The gas remaining from the condensation, which contains $H_2S$ and some $CO_2$, is removed through pipe *17* for final disposal (e.g., to a vent or incinerator or to an apparatus which converts the $H_2S$ to sulfur, such as a Claus unit of a Stretford conversion unit (not shown)).

The solution is liberated from most of the gas which it contains while flowing downward through the regenerator *12* and exits through pipe *18* at the bottom of the regenerator for transfer to a reboiler *19*. Reboiler *19*, equipped with an external source of heat (e.g., steam is injected through pipe *20* and the condensate leaves through a second pipe (not shown)), vaporizes a portion of this solution (mainly water) to drive further $H_2S$ therefrom. The $H_2S$ and steam driven off are returned via pipe *21* to the lower section of the regenerator *12* and leave through pipe *13* for entry into the condensation stages of gas treatment. The solution remaining in the reboiler *19* is drawn through pipe *22*, cooled in heat exchanger *9*, and introduced via the action of pump *23* (optional if pressure is sufficiently high) through pipe *5* into the absorber column *2*.

The amino compounds herein are found to be superior to those used in the past, particularly to MDEA and DEAE, in terms of both selectivity and capacity for maintaining selectivity over a broad loading range. Typically, a gaseous stream to be treated having a 1:10 mole ratio of $H_2S$:$CO_2$ from an apparatus for thermal conversion of heavy residual oil, or a Lurgi coal gas having a mole ratio of $H_2S$:$CO_2$ of less than 1:10 will yield an acid gas having a mole ratio of $H_2S$:$CO_2$ of about 1:1 after treatment by the process of the present invention. The process herein may be used in conjunction with another $H_2S$ selective removal process; however, it is preferred to carry out the process of this invention by itself, since the amino compounds are extremely effective by themselves in preferential absorption of $H_2S$.

The invention is illustrated further by the following examples, which, however, are not to be taken as limiting in any respect. All parts and percentages, unless expressly stated to be otherwise, are by weight. Also, the $pK_a$ values were obtained at 20°C unless otherwise noted. The abbreviation b.p. means boiling point.

## Example 1

Preparation of N-(3-hydroxypropyl)azetidine

To 14.4 g of $LiAlH_4$ in 270 ml of tetrahydrofuran was added 99 g of ethyl-3-(N-azetidinyl)propionate dissolved in 90 ml of tetrahydrofuran at a rate sufficient to maintain a gentle reflux. After an additional one-hour reflux the reaction mixture was cooled and treated sequentially with 14 ml of $H_2O$ and 14 ml of 12.5% NaOH. Filtration and distillation yielded 35.7 g of N-(3-hydroxypropyl)azetidine (b.p. = 94.6°C at 20 mm; analysis for $C_6H_{13}NO$, calculated: %N = 12.16; found: %N = 12.10).

## Example 2

Preparation of N-(3-hydroxypropyl)azepane

A solution of 1 mole of azepane and 0.5 mole of 3-chloro-1-propanol in 500 ml of ethanol was refluxed for 18 hours. The reaction mixture was treated with 0.55 mole of KOH and reflexed for 0.75 hour. Cooling, filtration and distillation yielded 88% of N-(3-hydroxypropyl)azepane (b.p. = 136°C at 21 mm; analysis for $C_9H_{19}NO$, calculated: %N = 8.91; found: %N = 8.30).

Example 3

Preparation of N-(3-hydroxypropyl)-2,5-dimethylpyrrolidine

A total of 3 mole of 2,5-hexanedione, 3 moles of 3-amino-1-propanol, 10 g of 10% Pd/C, and 500 ml of ethanol were charged to an autoclave. The reaction mixture was pressured up to 77.3 kg/cm$^2$ (7,580,540 Pa) of $H_2$ and kept for 3 hours at 100°C. Distillation yielded 170 g of N-(3-hydroxypropyl)-2,5-dimethylpyrrolidine (b.p. = 119°C at 25 mm).

Example 4

Preparation of N-(hydroxyethoxyethyl)-2,5-dimethylpyrrolidine

A solution of 0.95 mole of 2,5-hexanedione, 0.95 mole of diglycolamine, and 1.4 g of p-toluenesulfonic acid in 400 ml of toluene was refluxed in a flask fitted with a Dean-Stark trap. After removal of the required amount of water, distillation yielded 157 g of N-(hydroxyethoxyethyl)-2,5-dimethylpyrrole with b.p. = 110°C at 13 mm.

The pyrrole, 0.8 mole in 1.2 l of ethanol, was hydrogenated at 77.3 kg/cm$^2$ (7,580,540 Pa) $H_2$ for three hours at 100°C using 5 g of 10% Pd/C. The cooled reaction mixture was filtered and distilled to yield N-(hydroxyethoxyethyl)-2,5-dimethylpyrrolidine (b.p. = 80°C at 0.4 mm).

Example 5

Selective $H_2S$ Removal from a Mixture Containing $H_2S$ and $CO_2$

Fig. 2 illustrates the sparged absorber unit, operated on a semi-batch mode, used to evaluate the selectivity for $H_2S$ removal of the amino compounds of the invention herein. A gas mixture comprised of 10% $CO_2$, 1% $H_2S$ and 89% $N_2$, expressed in volume percent, respectively, was passed from a gas cylinder (not shown) through line *30* to a meter *31* measuring the rate at which the gas is fed to the absorber. For all examples this rate was 3.6 liters per minute. The gas was then passed through line *32* to a gas chromatography column (not shown) continuously monitoring the composition of the inlet gas and through lines *33* and *34* to a sparged absorber unit *35*, which is a cylindrical glass tube 45 cm high and 3.1 cm in diameter charged with 100 ml of the absorbent amine solution *36*. The gas was passed through the solution at a solution temperature of 40°C, and 10-ml samples of the solution were periodically removed from the bottom of the absorber unit through lines *34* and *37* to be analyzed for $H_2S$ and $CO_2$ content. The $H_2S$ content in the liquid sample was determined by titration with silver nitrate. The $CO_2$ content of the liquid sample was analyzed by acidifying the sample with an aqueous solution of 10% HCl and measuring the evolved $CO_2$ by weight gain on NaOH-coated asbestos.

While the solution was being periodically withdrawn from the bottom of the absorber unit, the gas mixture was removed from the top thereof via line *38* to a trap *39* which served to scrub out any $H_2S$ in the outlet gas. The resulting gas could optionally then be passed via lines *40* and *41* for final disposal or via line *42* to a gas chromatography column (not shown) for periodic evaluation of the composition of the outlet gas to check for system leaks. For purposes of the examples, the $H_2S$ and $CO_2$ contents of the inlet gas phase were measured, and the $H_2S$ and the $CO_2$ contents of the liquid phase were determined as described above. These data were used to calculate selectivity values of the amine as defined above, which were plotted as a function of the loading of the absorbent solution with $H_2S$ and $CO_2$, in units of moles acid gas per mole of the amino compound.

The above procedure was employed using as the absorbent solution aqueous 3M solutions of tropine ($pK_a$ = 10.3, b.p. = 233°C), N-(3-hydroxypropyl)pyrrolidine (HPP) ($pK_a$ = 10.21, b.p. = 103°C at 13 mm) and methyldiethanolamine (MDEA) as control. The selectivity plots, given in Fig. 3, compare the $H_2S$ selectivities achieved using an azabicyclic alcohol (tropine), a similarly structured monocyclic aminoalkanol (HPP) and an acyclic alcohol (MDEA). From the plots it is seen that tropine and HPP have a far greater selectivity that MDEA, both at low and high $CO_2$ and $H_2S$ loadings but particularly at the higher $H_2S$ and $CO_2$ loadings where MDEA has negligible selectivity.

The data in Fig. 3 also show that the amino compounds of the present invention have very high capacity for both $H_2S$ and $CO_2$ compared to methyldiethanolamine (MDEA) in addition to high $H_2S$ selectivities. It will be apparent from an inspection of the data in Fig. 3 that if the absorption process is conducted under conditions such that the amino compound has a long contact time with the gases to be absorbed, the selectivity for $H_2S$ decreases, but the overall capacity for both $CO_2$ and $H_2S$ remains rather high. Therefore, one may, in some instances, wish to carry out a "non-selective" absorption process to take advantage of the large absorption capacity of the amino compounds of the invention. Accordingly, one may carry out a "non-selective" acid gas removal absorption process using the amino compounds of the invention. Such "non-selective" processes are particularly useful in scrubbing natural gases which contain relatively high levels of $H_2S$ and low to nil levels of $CO_2$. As such, the amino compounds of the invention may replace some or all of monoethanolamine (MEA) of diethanolamine (DEA) commonly used for such scrubbing processes.

Example 6

The procedure of Example 5 was repeated using as the absorbent solution aqueous 3M solutions of 9-methyl-granatanin-3-ol ($pK_a$ = 9.9, m.p. = 92°C, b.p. = about 250°C at 760 mm) and N-(3-hydroxypropyl)-piperidine (HPPi). The selectivity plots are given in Fig. 4.

Example 7

The procedure of Example 5 was repeated using as the absorbent solution aqueous 3M solutions of tropine, N-(3-hydroxypropyl)azetidine (HPA) (as prepared in Example 1), and diethylmonoethanol (DEAE) (as a control). Their selectivity plots, given in Fig. 5, show the superior selectivity for $H_2S$ of tropine and HPA over an acyclic aminoalcohol.

From the selectivity plots shown in Figs. 3, 4, and 5 it is apparent that tropine, an azabicyclic alcohol, exhibits even better selectivity performance than the monocyclic aminoalkanols, HPP, HPPi and HPA.

Example 8

The procedure of Example 5 was repeated using as the absorbent solution aqueous 3M solutions of N-hydroxyethylpyrrolidine (HEP) ($pK_a = 9.95$, b.p. = 80°C at 13 mm), N-(2-hydroxyethoxyethyl)pyrrolidine (HEEP) ($pK_a = 9.95$, b.p. = 110°C at 5 mm) and diethylmonoethanolamine (DEAE) as control. From the three selectivity plots shown in Fig. 6 it is apparent that HEP and HEEP are much more selective than DEAE and are even more selective at higher $H_2S$ and $CO_2$ loadings where DEAE has poorer selectivity. Also, it is apparent that O-alkoxylation does not adversely affect the ability of the aminoalkanol to absorb $H_2S$ selectively.

Example 9

The procedure of Example 5 was repeated using as the absorbent solution aqueous 3M solutions of one of four amines, i.e., N-(4-hydroxy-2-butyl)pyrrolidine (H2BP) ($pK_a = 10.25$, b.p. = 98°C at 7 mm), N-(4-hydroxybutyl)pyrrolidine (HBP) ($pK_a = 10.21$, b.p. = 95°C at 2 mm), N-(3-hydroxypropyl)piperidine (HPPi) ($pK_a = 10.2$, b.p. = 97°C at 5 mm), and N-methyl-2-hydroxyethylpiperidine (MHEPi) ($pK_a = 9.90$, b.p. = 233°C at 760 mm). A selectivity plot for each amine was recorded, as shown in Fig. 7. It can be seen that HMP is the best of the four in terms of both selectivity and maintenance of capacity. However, all four amines showed better selectivity at the loading ranges tested than both MDEA and DEAE illustrated in Fig. 3 and 6, respectively.

Example 10

The procedure of Example 5 was repeated using as the absorbent solution aqueous 3M solutions of one of four N-(3-hydroxypropyl)-substituted heterocycles wherein the heterocycle contained 4, 5, 6 or 7 ring atoms, namely, N-(3-hydroxypropyl)azetidine (prepared as described above), N-(3-hydroxypropyl)pyrrolidine, N-(3-hydroxypropyl)piperidine, and N-(3-hydroxypropyl)azepane (prepared as described above). From the selectivity plots shown in Fig. 8 it is apparent that decrease in ring size improves the selectivity of the aminoalkanol for the $H_2S$, with the azetidinyl compound being the best of the four.

Example 11

The procedure of Example 5 was repeated using as the absorbent solution aqueous 3M solutions of N-(3-hydroxypropyl)-2,5-dimethylpyrrolidine (HPDP) and N-(hydroxyethoxyethyl)-2,5-dimethylpyrrolidine (HEEDP). The two selectivity plots are shown in Fig. 9.

Example 12

Table 1 shows the effect of O-alkoxylation of the heterocyclic aminoalkanols on their boiling points and $pK_a$ values. It can be seen that in each case the boiling points increase relative to the respective parent compound while the $pK_a$ remains constant. In addition to their low volatility and suitable basicity, the alkoxylated aminoalkanols exhibit a solubility in water (> 3M) which is comparable or identical to that of the parent aminoalkanol.

TABLE 1

| Aminoalkanol | $pK_a$ | Boiling Point, °C (mm) |
|---|---|---|
| 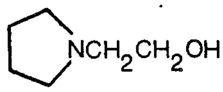 | 9.95 | 80 (13) |
| 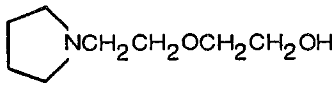 | 9.95 | 110 (5) |
| 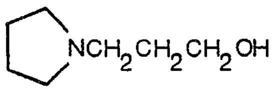 | 10.20 | 101 (13) |
| 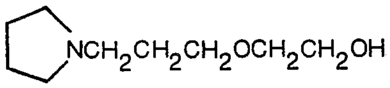 | 10.20 | 140 (20) |
| 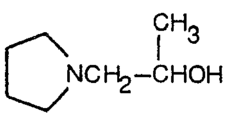 | 10.20 | 75 (14) |
| 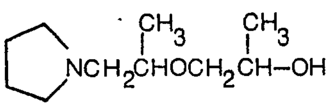 | 10.20 | 100 (1) |

While all examples herein illustrate the superior performance of the amino compounds for selective $H_2S$ removal using an absorber unit as represented by Fig. 2, it will also be possible to achieve effective selective $H_2S$ removal by using the amino compounds in an absorption-regeneration unit as depicted in Fig. 1.

In summary, this invention is seen to provide a special class of amino compounds characterized as nitrogen heterocyclic tertiary aminoalkanols and aminoetheralkanols and tertiary amino azabicyclic alcohols or ether alcohols having a high selectivity for $H_2S$ in preference to $CO_2$, which selectivity is maintained at high $H_2S$ and $CO_2$ loading levels.

**Claims**

1. A process for removing hydrogen sulphide from a normally gaseous stream which also contains carbon dioxide which comprises contacting said stream in an absorber with an absorbent solution comprising a solvent and an amino compound wherein the amino compound is a nitrogen heterocyclic tertiary aminoalkanol, a nitrogen heterocyclic tertiary aminoetheralkanol, a tertiary amino azabicyclic alcohol or a tertiary amino azabicyclic ether alcohol, the process being conducted under conditions wherein the residence time of the liquid in the absorber is minimised to reduce reaction with carbon dioxide whilst said residence time is maintained sufficient for the liquid to absorb substantially the maximum amount of hydrogen sulphide gas.

2. A process according to claim 1 wherein the normally gaseous stream also contains $CO_2$ and $H_2S$ is selectively absorbed from the stream.

3. A process according to either of claims 1 and 2 wherein the amino compound has a $pK_a$ value at 20°C of greater than 8.6.

4. A process according to any one of claims 1 to 3 wherein the solvent is water, a physical absorbent, or a mixture thereof.

5. A process according to any one of claims 1 to 4 wherein the total concentration of amino compound in the absorbent solution is in the range of from about 0.1 to 6 moles per litre.

6. A process according to any one of claims 1 to 5 which is conducted at a temperature ranging from about 20 to 100°C and at a pressure ranging from 0.4 to 140.6 kg/cm$^2$ (39,227—13,788,149 Pa), the absorbent solution is regenerated by heating at a temperature ranging from 50 to about 170°C and at a pressure ranging from 0.07 to about 3.5 kg/cm$^2$ (6,865—343,233 Pa) and by stripping the solution of its absorbed $H_2S$.

7. A process according to any one of claims 1 to 6 wherein the amino compound is N-(3-hydroxypropyl)azetidine, N-hydroxyethylpyrrolidine, N-(3-hydroxypropyl)pyrrolidine or 9-methyl-granatanin-3-ol.

8. A process according to any one of claims 1 to 6 wherein the amino compound is tropine.

**Patentansprüche**

1. Verfahren zur Entfernung von Schwefelwasserstoff aus einem normalerweise gasförmigen Strom, der auch Kohlendioxid enthält, dadurch gekennzeichnet, daß der Strom in einer Absorptionsvorrichtung mit einer Absorptionsmittellösung kontaktiert wird, die ein Lösungsmittel und eine Aminoverbindung enthält, wobei es sich bei der Aminoverbindung um ein stickstoffheterocyclisches tertiäres Aminoalkanol, ein stickstoffheterocyclisches tertiäres Aminoetheralkanol, einen tertiären Aminoazabicycloalkohol oder eine tertiären Aminoazabicycloetheralkohol handelt, und das Verfahren unter Bedingungen durchgeführt wird, unter denen dei Verweilzeit der Flüssigkeit in dem Absorptionsvorrichtung minimiert ist, um die Reaktion mit Kohlendioxid zu reduzieren, die Verweilzeit gleichzeitig aber ausreichend ist, daß die Flüssigkeit im wesentlichen die maximale Menge Schwefelwasserstoffgas absorbieren kann.

2. Verfahren nach Anspruch 1, dadurch gekennzeichnet, daß der normalerweise gasförmige Strom auch $CO_2$ enthält und $H_2S$ selektiv aus dem Strom absorbiert wird.

3. Verfahren nach Anspruch 1 oder 2, dadurch gekennzeichnet, daß die Aminoverbindung einen $pK_a$-Wert bei 20°C von mehr als 8,6 besitz.

4. Verfahren nach einem der Ansprüche 1 bis 3, dadurch gekennzeichnet, daß das Lösungsmittel Wasser, ein physikalisches Absorptionsmittel oder eine Mischung derselben ist.

5. Verfahren nach einem der Ansprüche 1 bis 4, dadurch gekennzeichnet, daß die Gesamtkonzentration der Aminoverbindung in der Absorptionsmittellösung im Bereich von etwa 0,1 bis 6 Mol je Liter liegt.

6. Verfahren nach einem der Ansprüche 1 bis 5, dadurch gekennzeichnet, daß es bei einer Temperatur im Bereich von 20 bis 100°C und bei einem Druck im Bereich von 39,227 bis 13,788,149 Pa durchgeführt wird, die Absorptionsmittellösung durch Erhitzen auf eine Temperatur im Bereich von 50 bis etwa 170°C und bei einem Druck im Bereich von 6,885 bis 343,233 Pa und durch Strippen der Lösung vom darin absorbierten $H_2S$ regeneriert wird.

7. Verfahren nach einem der Ansprüche 1 bis 6, dadurch gekennzeichnet, daß die Aminoverbindung N-(3-Hydroxypropyl)azetidin, N-Hydroxyethylpyrrolidin, N-(3-Hydroxypropyl)pyrrolidin oder 9-Methyl-granatanin-3-ol ist.

8. Verfahren nach einem der Ansprüche 1 bis 6, dadurch gekennzeichnet, daß die Aminoverbindung Tropin ist.

**Revendications**

1. Procédé pour l'élimination d'hydrogène sulfuré d'un courant normalement gazeux qui contient aussi du dioxyde de carbone, qui comprend la mise en contact dudit courant dan un absorbeur avec une solution absorbante comprenant un solvant et un composé amino dans laquelle le composé amino est un amino alcanol tertiaire comportant un hétérocycle azoté, un amino étheralcanol tertiaire comportant un hétérocycle azoté, un amino alcool tertiaire azabicyclique ou un amino étheralcool tertiaire azabicyclique, le procédé étant conduit dans des conditions dans lesquelles le temps de séjour du liquide dans l'absorbeur est minimisé pour réduire la réaction avec le dioxyde de carbone tout en maintenant le temps de séjour à une valeur suffisante pour que le liquide absorbe essentiellement la quantité maximum d'hydrogène sulfuré gazeux.

2. Procédé selon la revendication 1, dans lequel le courant normalement gazeux contenant aussi $CO_2$ et $H_2S$ est absorbé sélectivement à partir du courant.

3. Procédé selon l'une des revendications 1 ou 2, dans lequel le composé amino a un $pK_a$ à 20°C supérieur à 8,6.

4. Procédé selon l'une quelconque des revendications 1 à 3, dans lequel le solvant est de l'eau, un absorbant physique ou un de leurs mélanges.

5. Procédé selon l'une quelconque des revendications 1 à 4, dans lequel la concentration totale d'une composé amino dans la solution d'absorbant est dans l'intervalle d'environ 0,1 à 6 moles par litre.

6. Procédé selon l'une quelconque des revendications 1 à 5, qui est conduit à une temperature d'environ 20 à 100°C et sous une pression de 0,4 à 140,6 kg/cm$^2$ (39,227—13,788,149 Pa), la solution

absorbante est régénérée par chauffage à une temperature de 50 à environ 170°C et sous une pression de 0,07 à environ 3,5 kg/cm$^2$ (6,885—343,233 Pa) et par entraînement du $H_2S$ absorbé de la solution.

7. Procédé selon l'une quelconque des revendications 1 à 6, dans lequel le composé amino est la N-(3-hydroxypropyl)azétidine, la N-hydroxyéthylpyrrolidine, la N-(3-hydroxypropyl)pyrrolidine ou le 9-méthyl-granatanine-3-ol.

8. Procédé selon l'une quelconque des revendications 1 à 6, dans lequel le composé amino est la tropine.

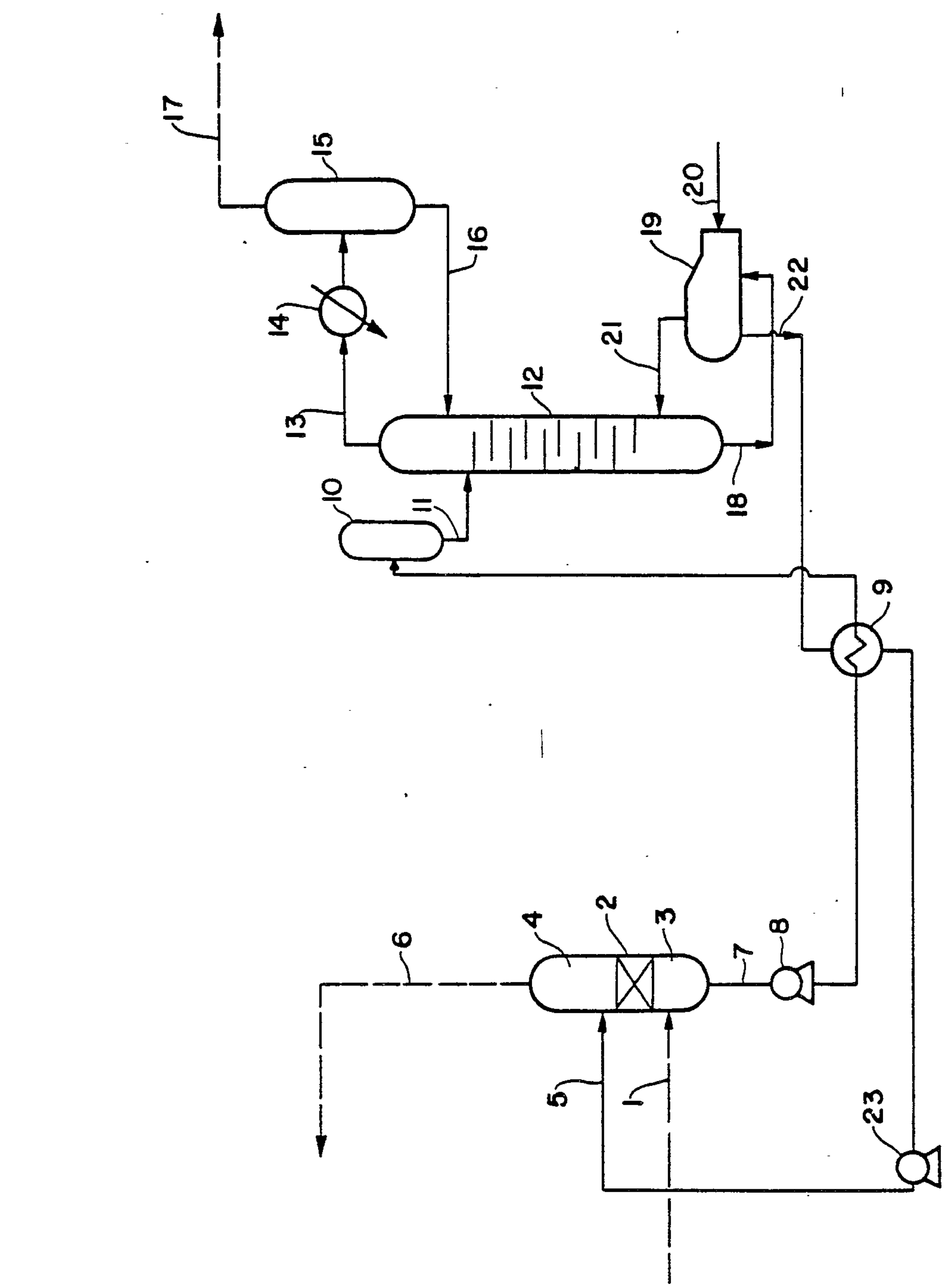


Absorption-regeneration unit for selective $H_2S$ removal

FIG.1

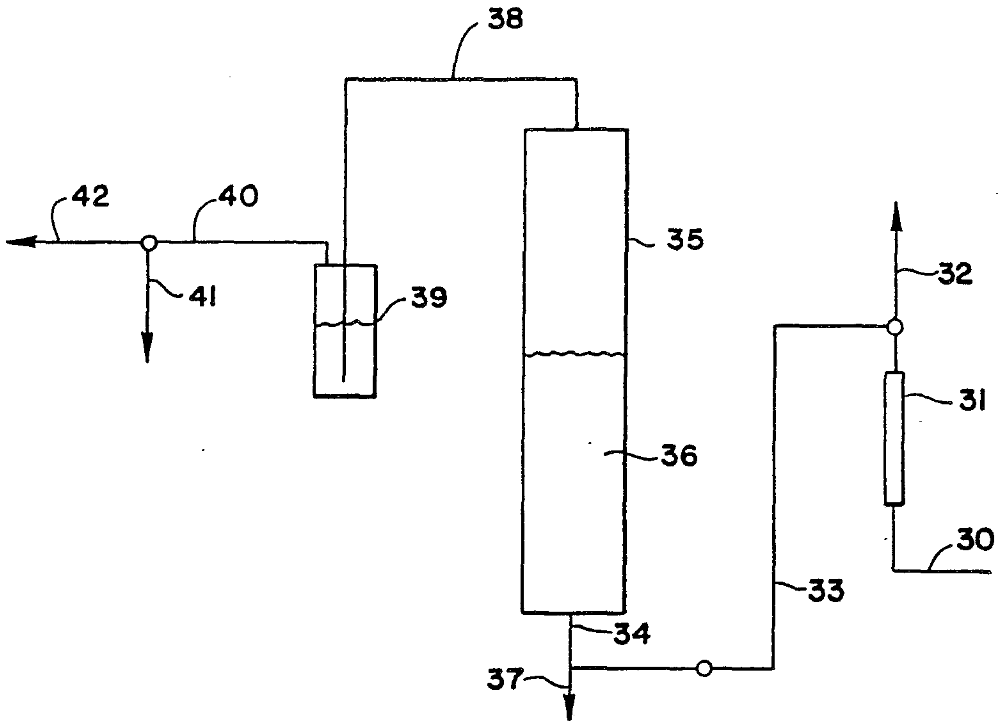


Sparged absorber unit for selective $H_2S$ removal

FIG. 2

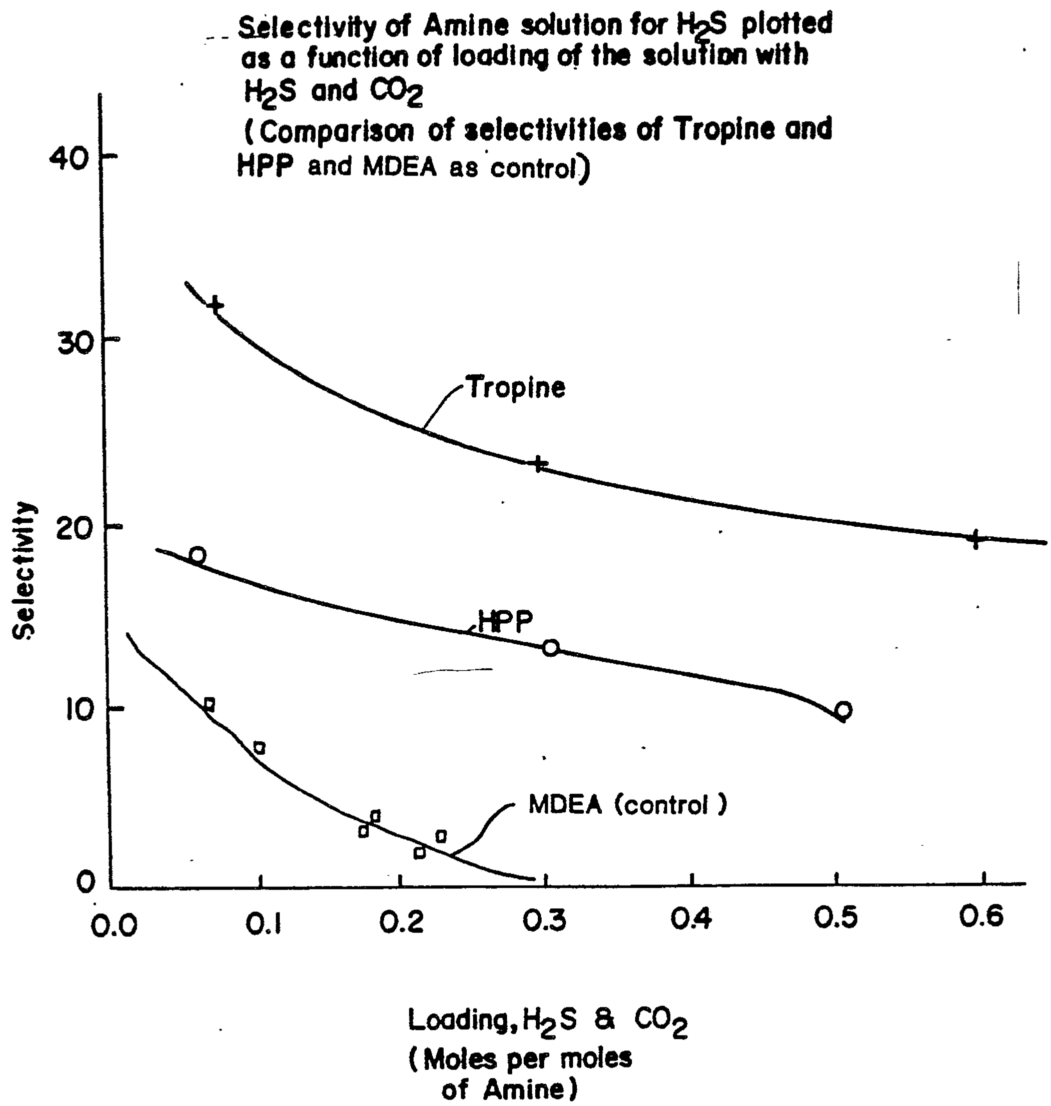
Selectivity of Amine solution for $H_2S$ plotted as a function of loading of the solution with $H_2S$ and $CO_2$
(Comparison of selectivities of Tropine and HPP and MDEA as control)
40
30
20
10
0
Selectivity
Tropine
HPP
MDEA (control)
0.0
0.1
0.2
0.3
0.4
0.5
0.6
Loading, $H_2S$ & $CO_2$
(Moles per moles of Amine)

FIG. 3

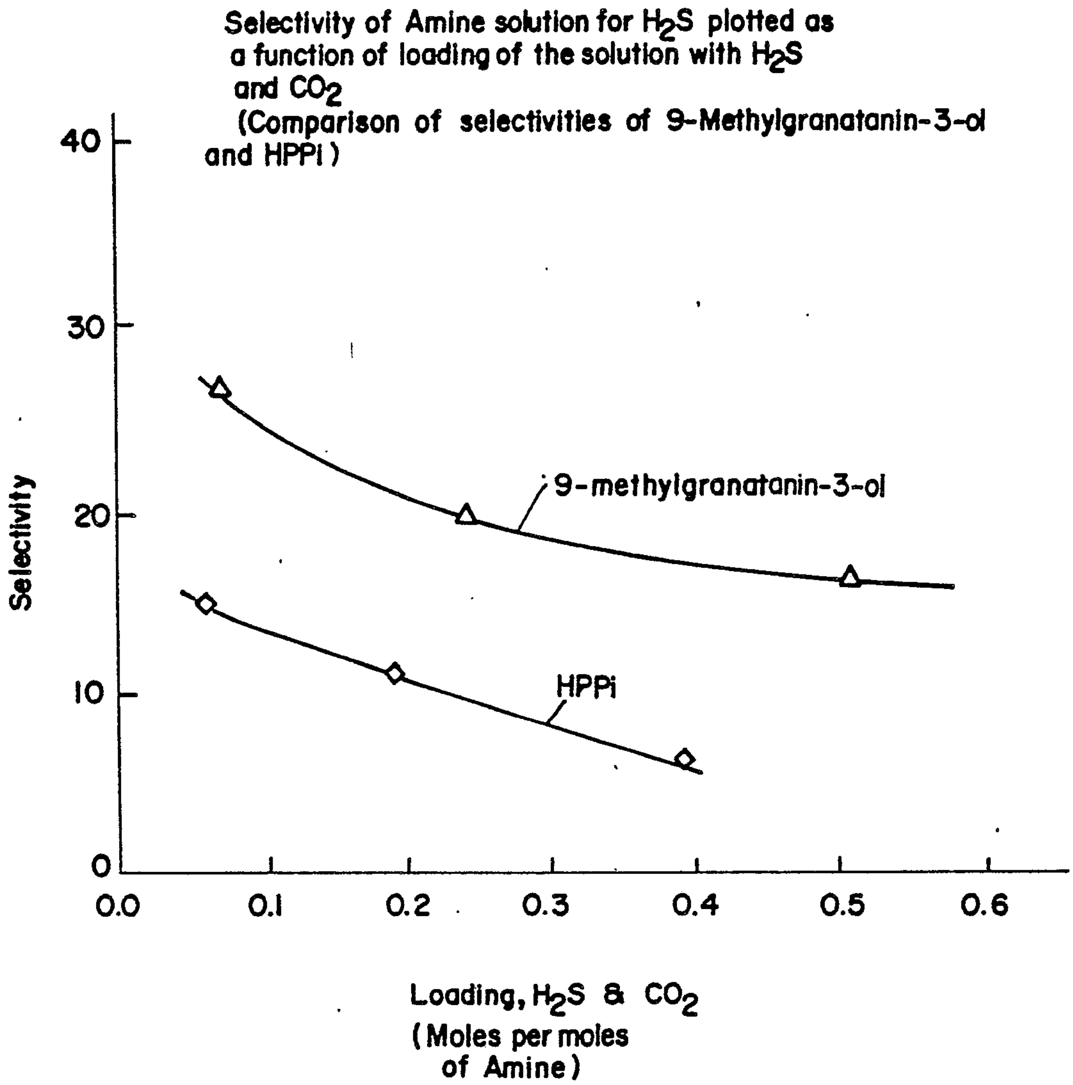
Selectivity of Amine solution for $H_2S$ plotted as a function of loading of the solution with $H_2S$ and $CO_2$
(Comparison of selectivities of 9-Methylgranatanin-3-ol and HPPi)
Selectivity
40
30
20
10
0
0.0
0.1
0.2
0.3
0.4
0.5
0.6
9-methylgranatanin-3-ol
HPPi
Loading, $H_2S$ & $CO_2$
(Moles per moles of Amine)

FIG. 4

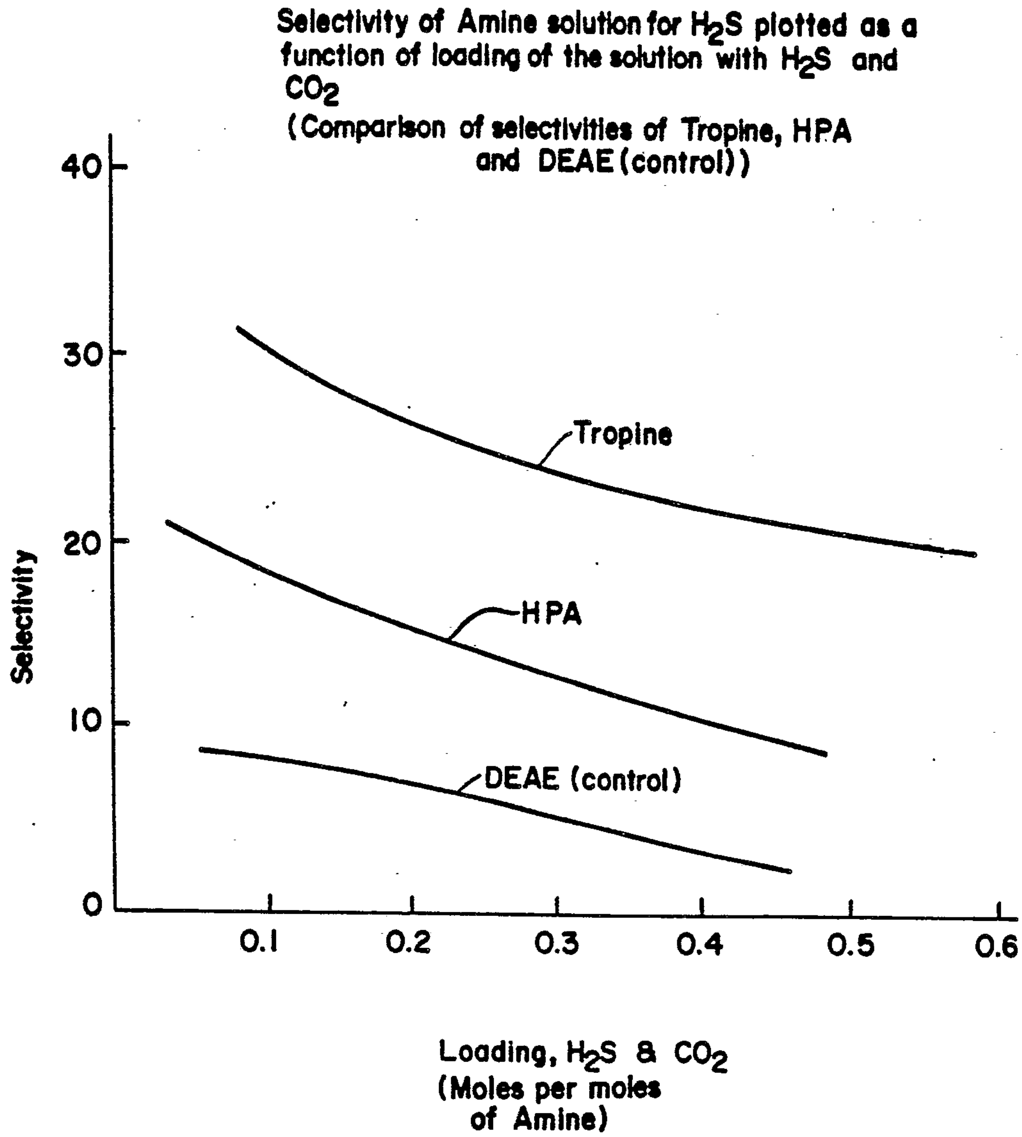
Selectivity of Amine solution for $H_2S$ plotted as a function of loading of the solution with $H_2S$ and $CO_2$
(Comparison of selectivities of Tropine, HPA and DEAE (control))
40
30
20
10
0
Selectivity
Tropine
HPA
DEAE (control)
0.1
0.2
0.3
0.4
0.5
0.6
Loading, $H_2S$ & $CO_2$
(Moles per moles of Amine)

FIG. 5

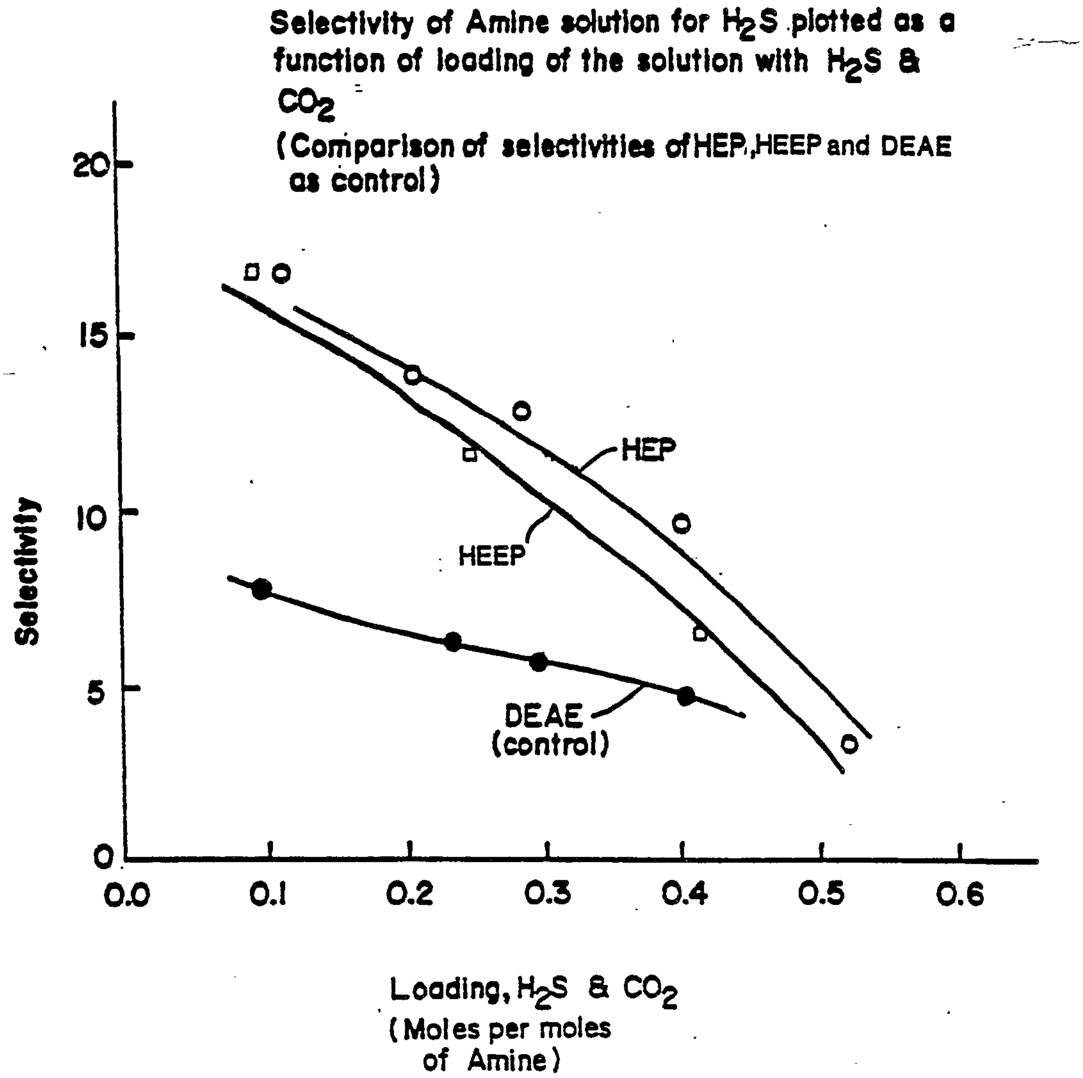
Selectivity of Amine solution for $H_2S$ plotted as a function of loading of the solution with $H_2S$ & $CO_2$
(Comparison of selectivities of HEP, HEEP and DEAE as control)
20
15
10
5
0
Selectivity
HEP
HEEP
DEAE
(control)
0.0
0.1
0.2
0.3
0.4
0.5
0.6
Loading, $H_2S$ & $CO_2$
(Moles per moles
of Amine)

FIG. 6

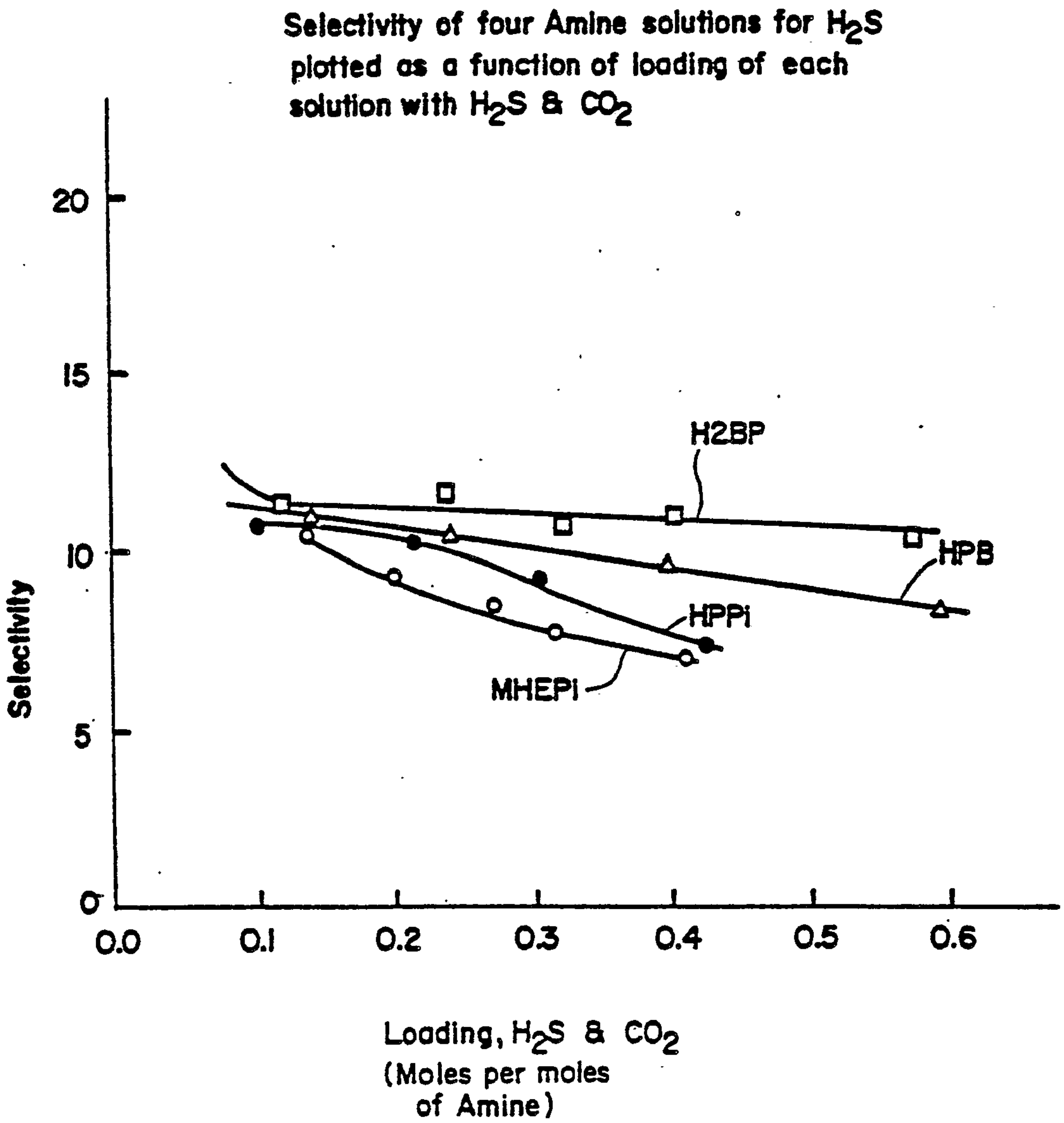
Selectivity of four Amine solutions for $H_2S$ plotted as a function of loading of each solution with $H_2S$ & $CO_2$
Selectivity
20
15
10
5
0
0.0
0.1
0.2
0.3
0.4
0.5
0.6
H2BP
HPB
HPPi
MHEPI
Loading, $H_2S$ & $CO_2$ (Moles per moles of Amine)

FIG. 7

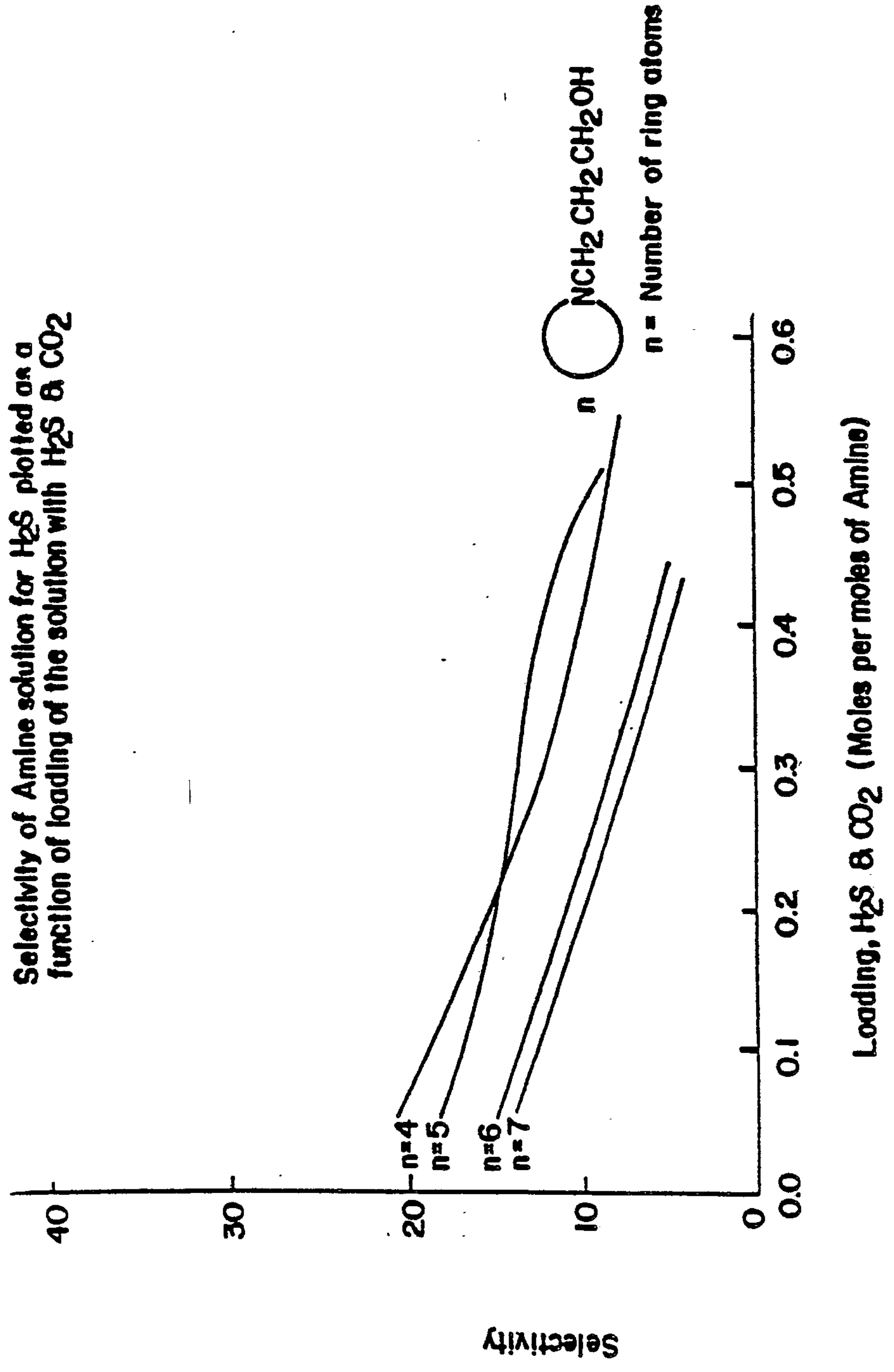
Selectivity of Amine solution for $H_2S$ plotted as a function of loading of the solution with $H_2S$ & $CO_2$
Selectivity
40
30
20
10
0
n=4
n=5
n=6
n=7
0.0
0.1
0.2
0.3
0.4
0.5
0.6
Loading, $H_2S$ & $CO_2$ (Moles per moles of Amine)
$NCH_2CH_2CH_2OH$
n
n = Number of ring atoms

FIG. 8

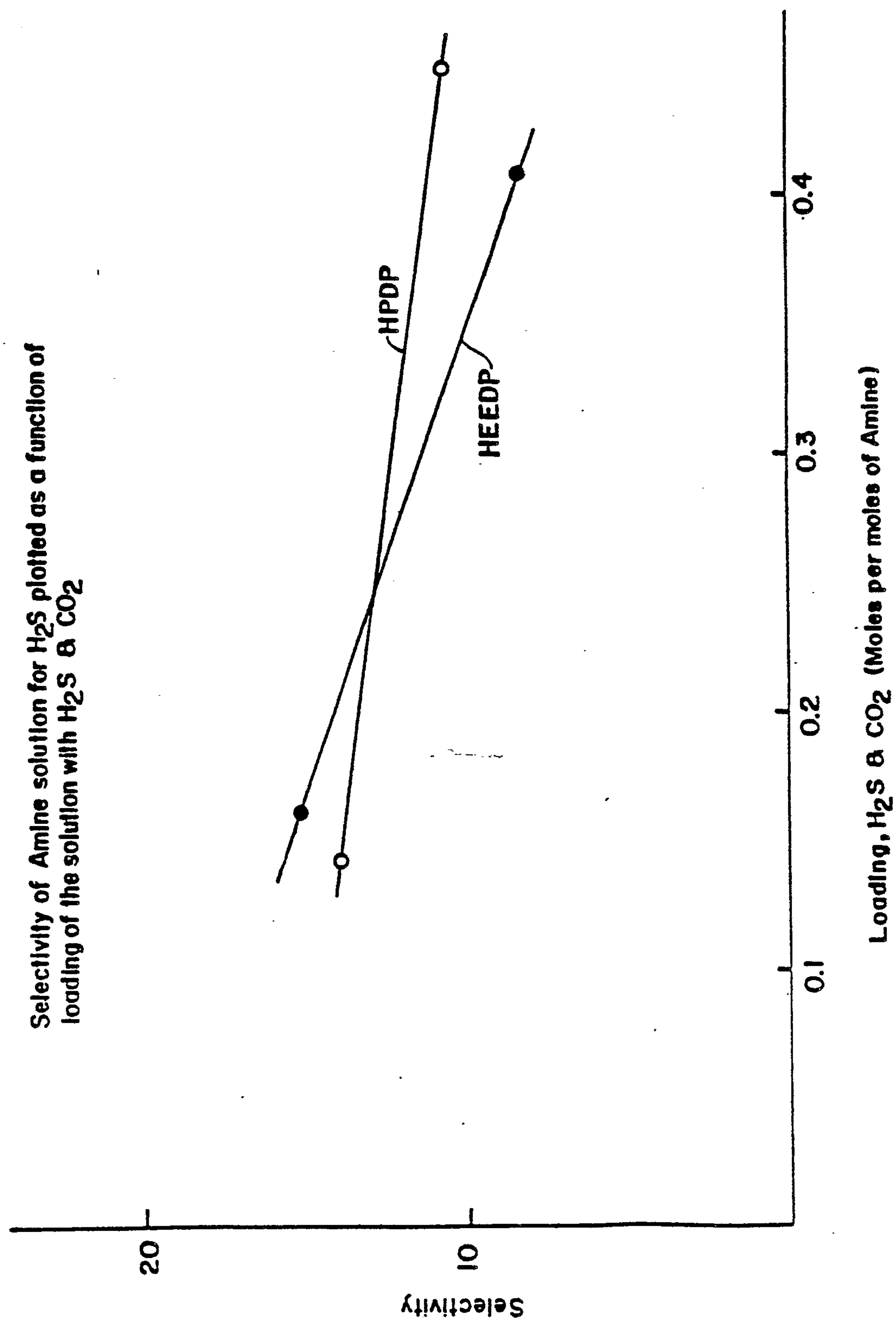
Selectivity of Amine solution for $H_2S$ plotted as a function of loading of the solution with $H_2S$ & $CO_2$
HPDP
HEEDP
20
10
Selectivity
0.1
0.2
0.3
0.4
Loading, $H_2S$ & $CO_2$ (Moles per moles of Amine)

FIG. 9